# EUROPÄISCHE PATENTSCHRIFT

(11) **EP 2 925 669 B1**
(45) Veröffentlichungstag und Bekanntmachung des Hinweises auf die Patenterteilung: **31.10.2018**
(21) Anmeldenummer: 13780357.3
(22) Anmeldetag: 23.10.2013
(51) Int. Cl.: C01B 3/26, B60K 15/03, B01J 19/24, C01B 3/00

(54) **VERWENDUNG FLÜSSIGER VERBINDUNGEN UND VERFAHREN ZU DEREN VERWENDUNG ALS WASSERSTOFFSPEICHER**
USE OF LIQUID COMPOUNDS AND METHOD FOR THE USE THEREOF AS HYDROGEN STORES
UTILISATION DES COMPOSÉS LIQUIDES ET PROCÉDÉ D'UTILISATION COMME ACCUMULATEURS D'HYDROGÈNE

(30) Priorität: 28.11.2012 DE 102012221809
(43) Veröffentlichungstag der Anmeldung: 07.10.2015
(73) Patentinhaber: Bayerische Motoren Werke Aktiengesellschaft, 80809 München (DE)
(72) Erfinder: DUNGS, Jennifer, 70173 Stuttgart (DE); TEICHMANN, Daniel, 80796 München (DE); BRÜCKNER, Nicole, 91054 Erlangen (DE); BÖSMANN, Andreas, 91093 Heßdorf (DE); WASSERSCHEID, Peter, 91054 Erlangen (DE)
(86) Internationale Anmeldenummer: PCT/EP2013/072156
(87) Internationale Veröffentlichungsnummer: WO 2014/082801

(56) Entgegenhaltungen:
- DE-A1-102007 039 478
- DE-A1-102008 034 221
- US-A- 4 523 044
- US-A- 5 017 733

## Beschreibung

Die Erfindung betrifft die Verwendung flüssiger Mischungen gemäß Anspruch 1 und ein Verfahren zur Kraftstoffversorgung eines Versorgers gemäß Anspruch 4. Die heute diskutierten Szenarien zur Energiebereitstellung aus regenerativen Quellen im großen Maßstab, zum Beispiel Windparks in der Nordsee oder Desertec erfordern als wesentliche technische Voraussetzung geeignete Wege, um große Energiemengen möglichst verlustfrei speichern und transportieren zu können. Nur so lassen sich saisonale Schwankungen in der Erzeugung ausgleichen, nur so kann ein effizienter Transport der Nutzenergie über große Distanzen realisiert werden.
Ein besonders attraktiver Weg zur Bewältigung der oben beschriebenen Herausforderungen ist die Entwicklung neuer "Energietragender Stoffe" und die Bereitstellung von Technologien zu deren effizienten energetischen Beladung und Entladung. Die Verwendung "Energietragender Stoffe" geht davon aus, dass die an einem "energiereichen" Ort, zu einer "energiereichen" Zeit bereitgestellte Energie genutzt wird, um zum Beispiel eine energiearme Flüssigkeit A in eine energiereiche Flüssigkeit B zu wandeln. B kann dann verlustfrei über große Zeiträume gelagert und mit hoher Energiedichte transportiert werden. Am Ort und zur Zeit des Energiebedarfs soll die energiereiche Flüssigkeit B unter Freisetzung von Nutzenergie wieder in A zurück verwandelt werden. A kann eine Flüssigkeit oder eine gasförmige Substanz sein. Ist A ebenso wie B eine Flüssigkeit bietet das Konzept die Möglichkeit A wieder an den Ort der Energieerzeugung zurückzubringen und erneut zu beladen.
Ein bevorzugter Ansatz zur technischen Realisierung eines Energietransport- und Energiespeichersystems auf Basis "Energietragender Stoffe" ist die Beladung des energiearmen Stoffes A mit Wasserstoff unter Bildung des energiereichen Stoffes B, wobei der dabei benötigte Wasserstoff aus einer Elektrolyse von Wasser mit Hilfe von bevorzugt regenerativ erzeugter elektrischer Energie bereit gestellt wird. Dieser energetische Beladungsvorgang erfolgt nach dem Stand der Technik typischerweise durch eine katalytische Hydrierreaktion unter Druck. Die energetische Entladung des Stoffes B erfolgt durch katalytische Dehydrierung bei niedrigen Drücken und hohen Temperaturen. Der dabei wieder freigesetzte Wasserstoff kann zum Beispiel in einer Brennstoffzelle oder in einem Verbrennungsmotor energetisch genutzt werden. Erfolgt die Wasserstofffreisetzung an Bord eines Fahrzeugs, kann der dabei bereit gestellte Wasserstoff direkt zum Betrieb des Fahrzeugs genutzt werden. Dem Stand der Technik bekannte Beispiele umfassen die Energiespeicherung in Form von CH₄, NH₃ oder Methanol. Bei der Wasserstoffentladung dieser Verbindungen entstehen die gasförmigen Stoffe CO₂ - im Falle von Methan und Methanol - bzw. Stickstoff - im Falle von NH₃.

Ein alternatives, bekanntes Konzept, bei dem die energiearme Form A eine Flüssigkeit darstellt und folglich bei der energetischen Entladung erneut eine Flüssigkeit erhalten wird, beschreibt die DE 10 2008 034 221 A1. Die energiearme Form A kann in diesem Fall als Flüssigkeit gelagert und transportiert werden, um zu einer energiereichen Zeit und an einem energiereichen Ort erneut mit Wasserstoff beladen zu werden. Solche Systeme werden als "Liquid Organic Hydrogen Carriers (LOHCs)" bezeichnet. Beispiele solcher LOHCs werden in der Patentanmeldung EP 1 475 349 A2 offenbart.

Bevorzugt handelt es sich bei den dem Stand der Technik bekannten LOHC-Systemen um Stoffpaare, bei denen der energiearme Stoff A eine hochsiedende, funktionalisierte, aromatische Verbindung darstellt, die im energetischen Beladungsvorgang hydriert wird. Ein offenbartes, besonders bevorzugtes Beispiel betrifft die Verwendung des Stoffpaares N-Ethylcarbazol/Perhydro-N-Ethylcarbazol, bei dem die energetische Beladung typischerweise bei rund 140 °C und erhöhten Drücken und die energetische Entladung bei Temperaturen zwischen 230 und 250°C durchgeführt werden kann. Der energiereiche Stoff Perhydro-N-Ethylcarbazol besitzt im genannten System eine Wasserstoff-Kapazität von rund 5,8 Massen-% Wasserstoff. So reicht die im freisetzbaren Wasserstoff gespeicherte Energie von 100 kg Perhydro-N-Ethylcarbazol aus, um ein Kraftfahrzeug etwa 500 km zu bewegen, wobei bei der energetischen Nutzung an Bord fast ausschließlich Wasserdampf als Verbrennungsprodukt gebildet wird. Damit stellt der Ansatz eine technisch interessante Alternative zu anderen Energiespeicherkonzepten für mobile Anwendungen dar.

Reaktionssysteme zur katalytischen Wasserstofffreisetzung aus flüssigen Energiespeichermolekülen bestehen nach dem Stand der Technik aus Festbettreaktoren oder Slurry-Phasenreaktoren. Außerdem sind Reaktoren zur Freisetzung von Wasserstoff aus einer Wasserstoff tragenden, flüssigen Verbindung in Entwicklung, mit einem druck- und temperaturfesten Reaktorgefäß, in dem wenigstens eine Funktion zur Bereitstellung des Wasserstoffs ausführbar ist, wobei das Reaktorgefäß wenigstens einen Körper enthält, der eine metallische Trägerstruktur besitzt auf die eine feste, hochporöse Beschichtung aufgebracht ist, die katalytisch wirkende Substanzen für die Freisetzung von Wasserstoff aus flüssigen, Wasserstoff tragenden Verbindungen enthält. Hier kann die Wasserstoff tragende, flüssige Verbindung vorteilhafterweise auch eine Mischung aus Wasserstoff tragender, flüssiger Verbindung in erheblichem Anteil und anderen Verbindungen sein.

Manche LOHC-Systeme, die dem Stand der Technik bekannt sind, weisen Heteroatom-Kohlenstoffbindungen auf. Dieses Strukturmerkmal aktiviert die Systeme für die katalytische Wasserstoffentladung. Allerdings führt die deutlich höhere Labilität der Stickstoff-Kohlenstoff- , im Vergleich zur Kohlenstoff-Kohlenstoff- oder Kohlenstoff-Wasserstoffbindung auch dazu, dass die thermische Stabilität aller LOHC-Systeme mit Stickstoff-Kohlenstoff-Bindung auf Temperaturen bis 280 °C begrenzt ist. Allerdings sind auch geringfügige thermische Zersetzungserscheinungen des LOHC-Systems für die technische Anwendung bereits relevant, da sich dadurch der Festpunkt des LOHC-Systems und die katalytische Belad- und Entladbarkeit in unvorteilhafter Weise ändert. Eine hohe thermische Stabilität erlaubt unter anderem Reaktionstemperaturen bei der katalytischen Wasserstofffreisetzung von über 280 °C, was verglichen mit niedrigeren Temperaturen eine höhere volumetrische Produktivität der Wasserstofffreisetzung zur Folge hat.

US5017733 beschreibt Mischungen enthaltend Isomere von Benzyltoluol und Dibenzyltoluol. Aufgabe der vorliegenden Erfindung ist es, eine flüssige Verbindung zur Verwendung als Wasserstoffspeicher anzugeben, die in großen Mengen bereitstellbar und deren Verwendung in technischen Einrichtungen einfach möglich ist, weil sie oben genannte Nachteile nicht aufweist, da sie ausschließlich aus Kohlenstoff und Wasserstoff aufgebaut ist und über 280 °C hinaus thermisch stabil ist. Außerdem soll ein Verfahren zur Versorgung eines Verbrauchers mit Wasserstoff unter Verwendung dieser flüssigen Verbindung bereit gestellt werden.
Die Aufgabe der Erfindung wird durch die Merkmale des ersten Anspruchs gelöst. Vorteilhafte Aus- und Weiterbildungen und das vorteilhafte Verfahren zur Versorgung eines Verbrauchers mit Wasserstoff sind Inhalt der abhängigen Ansprüche.

Beschrieben ist eine bei Raumtemperatur flüssige Mischung aus zwei oder mehreren Verbindungen, die ausschließlich aus den Elementen Kohlenstoff und Wasserstoff aufgebaut sind und in einzelnen bekannten Zusammensetzungen ein synthetisches Substanzgemisch bilden, das als Wärmeträgerflüssigkeit einsetzbar ist, dadurch gekennzeichnet, dass die Mischung mindestens eine Verbindung mit mindestens zwei nicht-kondensierten, nicht pi-konjugierten aromatischen Einheiten enthält und in katalytischen Verfahren zur Bindung bzw. Freisetzung von Wasserstoff an die bzw. von der Mischung verwendet wird.
Die in der Wasserstoff-armen Form als Wärmeträgeröl, zum Beispiel unter den Markennamen Marlotherm LH oder Marlotherm SH (beispielsweise Firma SASOL), in bestimmten Varianten bereits verwendete Mischung als flüssiges Wasserstoffspeicher- und -transportsystem zu verwenden, ist neu und erfinderisch, da die Möglichkeit einer Wasserstoffbeladung der Mischung bisher nirgendwo in Betracht gezogen wurde und mit der Wasserstoffbeladung eine neue Verwendung durch einen erfinderischen Vorgang möglich wird. Dies gilt auch für den Vorgang der Wasserstofffreisetzung aus der bisher unbekannten Verwendung der Wasserstoff-reichen Form als Wasserstoffträger. Denn gerade die Mischung weist zahlreiche wichtige, vorher ungeahnte Vorzüge gegenüber den bisher bekannten flüssigen Wasserstoffspeicher- und -transportsystemen auf, nämlich eine hohe Wasserstoffkapazität, niedrigen Dampfdruck, hohe chemische und thermische Stabilität bei kostengünstigem industriellem Zugang, bekannter und unproblematischer Toxizität und Ökotoxizität, und Kompatibilität mit allen Dichtungs- und Tankmaterialien. Durch die Nutzung von Wärmeträgerölen als LOHC-System kann vorteilhafterweise das nachteilige Verhalten der bisher verwendeten LOHC-Systeme aufgrund deren begrenzter thermischer Stabilität vermieden werden.
Ein vorteilhaftes Verfahren zur mindestens anteiligen Versorgung eines Verbrauchers mit Wasserstoff, unter Verwendung einer beschriebenen Mischung, zeichnet sich dadurch aus, dass ein Reaktor aus einem ersten Speichertank für die Wasserstoff tragende Mischung über eine Zulaufleitung mit dieser versorgt wird und die im Reaktor bei hoher Temperatur und niedrigem Druck dehydrierte Mischung über eine Ablaufleitung von dem Reaktor in einen zweiten Speichertank abgeleitet wird, wobei der Reaktor einen Verbraucher über eine Verbindungsleitung mit Wasserstoff versorgt. Ein solches Verfahren ist besonders vorteilhaft anzuwenden, wenn der Verbraucher eine Brennkraftmaschine oder wenigstens eine Brennstoffzelle ist und insbesondere zur Energieversorgung eines Kraftfahrzeugs beiträgt. Dabei können der erste und der zweite Speichertank miteinander in Verbindung stehen, auch mit der Möglichkeit, dass sich deren Inhalte durchmischen.
Ein bevorzugtes Verfahren gemäß der Erfindung ist dadurch gekennzeichnet, dass die Mischung im Reaktor mit einem metallhaltigen Katalysator kontaktiert wird und dabei Wasserstoff bindet oder freisetzt, wobei die für die Wasserstoffbeladung und Wasserstoffentladung verwendeten metallhaltigen Katalysatoren gleiche oder unterschiedliche feste Kontakte sind, die eines oder mehrere der Metalle Palladium, Nickel, Platin, Iridium, Ruthenium, Cobalt, Rhodium, Kupfer, Gold, Rhenium oder Eisen in feinverteilter Form auf einem porösen, unpolaren Träger enthalten.

Allen vorgenannten Verfahren ist gemein, dass im Reaktor aus der Wasserstoffbeladenen Mischung mittels katalytischer Dehydrierung, bei hoher Temperatur und niedrigem Druck, Wasserstoff freigesetzt wird.

Das hier zur Anwendung kommende Konzept der energietragenden Wärmeträgeröle besitzt den Vorteil, dass es unserer bisherigen Energieversorgung durch fossile Energieträger technisch nahe steht und daher die vorhandene Infrastruktur, wie Schiffe, Raffinerien, Tankstellen, genutzt werden kann. Insbesondere können über energietragende Wärmeträgeröle Energieüberschüsse aus regenerativer Produktion gespeichert und mit dem Energiebedarf für Mobilität, Beheizung und Transport in der heutigen Infrastruktur verknüpft werden. Diese Energiespeicher haben noch folgende Vorteile: Eine nahezu unbegrenzte, verlustfreie Speicherfähigkeit, eine hohe Energiedichte und geringe Kosten. Des Weiteren sind sie geeignet als Langzeitspeicher und Transportform von Energie.

Versuche zur Nutzung von handelsüblichen Wärmeträgerölen wie Marlotherm LH oder Marlotherm SH (beispielsweise von der Firma SASOL) als Wasserstoff-entladener Form eines LOHC-Systems, haben gezeigt, dass die das Wasserstoffspeicher- und -transportsystem bildende Mischung in der Wasserstoff-armen Form A günstigerweise Verbindungen mit mindestens zwei nicht-kondensierten aromatischen Einheiten in einem Massenanteil zwischen 5% und 100%, bevorzugt zwischen 60 und 100%, besonders bevorzugt zwischen 90 und 100% enthalten soll. Des Weiteren ist es vorteilhaft, wenn die Mischung zu über 50%, bevorzugt zu über 90% aus unterschiedlichen Verbindungen besteht, die alle mindestens zwei nicht-kondensierte aromatische Einheiten enthalten.

Dabei kann günstigerweise eine Verbindung der das Wasserstoffspeicher- und -transportsystem bildenden Mischung in der Wasserstoff-armen Form der Mischung die Substanz Dibenzyltoluol sein. Noch vorteilhafter ist es, wenn die Mischung zu über 50%, bevorzugt zu über 90% aus unterschiedlichen Dibenzyltoluolen besteht. So ist gewährleistet, dass sich die Wasserstoff-arme Form durch eine katalytische Hydrierreaktion unter Wasserstoffaufnahme in eine Wasserstoff-reiche Form überführen lässt, in der der geladene Wasserstoff in einem Massenanteil von mindestens 6% chemisch gebunden vorliegen kann, wobei der Wasserstoffdruck bei der katalytischen Hydrierung zwischen 5 und 200 bar, bevorzugt zwischen 10 und 100 bar und am Besten zwischen 30 und 80 bar liegt und die Reaktionstemperaturen der katalytischen Hydrierung zwischen 20°C und 230 °C, bevorzugt zwischen 50 °C und 200 °C, am Besten jedoch zwischen 100 und 180 °C liegen.

Im Folgenden sind anhand von drei Figuren allgemeine Stoffbeispiele für Wärmeträger, die als Wasserstoffträger vorteilhafterweise verwendet werden können, angeführt und beschrieben.

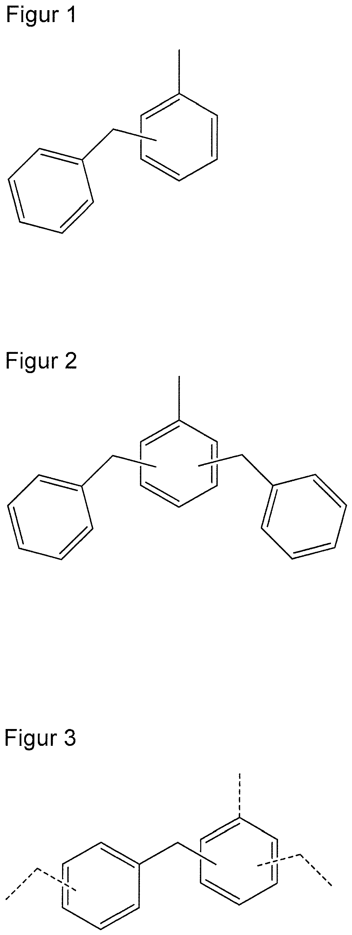

Marlotherm (zum Beispiel von der Firma SASOL) oder ähnliche technisch genutzte Wärmeträgeröle sind Gemische aus unterschiedlichen Isomeren von Benzyltoluol (Marlotherm LH, SASOL) und Dibenzyltoluol (Marlotherm SH, SASOL). Die unterschiedlichen Isomere bilden sich dadurch, dass die am zentralen Toluolkern gebundenen Benzylgruppen an unterschiedlichen Ringpositionen im Bezug auf die Methylgruppe des Toluols mit dem Toluolkern verknüpft sind. Weist man der Methylgruppe des Toluolkerns die Ringposition 1 zu, stellt Marlotherm LH (SASOL) eine Mischung von Benzyltoluolen dar, deren Benzylgruppe an den Positionen 2,3 oder 4 am Toluolkern gebunden ist. So ist in Figur 1 anhand Malotherm LH (SASOL), symbolisiert mit der Bindung der Benzylgruppe in die Ringmitte dargestellt, dass es sich um Isomerengemisch handelt, bei dem die Benzylgruppe bezüglich der Methylgruppe des Toluolrests (Position 1) in den Stellungen 2, 3 oder 4 gebunden ist.

Marlotherm SH (SASOL) stellt ein Gemisch von Dibenzyltoluolen dar. Weist man wieder der Methylgruppe des Toluolkerns die Ringposition 1 zu, sind die beiden Benzylgruppen in Marlotherm SH (SASOL) in den Positionen 2 und 3, 2 und 4, 2 und 5, 2 und 6, 3 und 4 oder 3 und 5 gebunden. In Figur 2 ist daher Malotherm SH (SASOL) dargestellt, wobei die Bindungen der Benzylgruppen in die Ringmitte symbolisieren, dass es sich um Isomerengemisch handelt, bei dem die Benzylgruppen bezüglich der Methylgruppe des Toluolrests (Position 1) in den Positionen 2 und 3, 2 und 4, 2 und 5, 2 und 6, 3 und 4 oder 3 und 5 gebunden sind.

Allgemeiner lassen sich die als Marlotherm LH (SASOL) und Marlotherm SH (SASOL), sowie die unter anderen Handelnsnamen und anderen Markeninhabern, zum Beispiel Hüls, als Wärmeträger genutzten Substanzgemische dadurch kennzeichnen, dass sie Verbindungen enthalten, die mindestens zwei nicht-kondensierte, nicht pi-konjugierte aromatische Einheiten aufweisen. Eine allgemeine Darstellung einer typischen Struktureinheit in solchen Gemischen zeigt Figur 3. Typischerweise sind eine bis fünf Benzyleinheiten an einem zentralen aromatischen Kern gebunden. Jede dieser Benzyleinheiten kann selbst wieder weitere Benzyleinheiten bzw. andere alkylaromatischen Substituenten tragen. Bei einer typischen Struktureinheit von Substanzen, die als Gemische z.B. unter den Handelsnamen Marlotherm LH (Hüls) oder Marlotherm SH (Hüls) als Wärmeträgeröle kommerziell genutzt werden symbolisiert die Bindung der Benzylgruppe und der anderen Substituenten in die Ringmitte, dass es sich um ein Isomerengemisch handelt, bei dem die Benzylgruppe bezüglich der anderen Substituenten in unterschiedlichen Positionen gebunden sein kann.

## Patentansprüche

1. Verwendung einer bei Raumtemperatur flüssigen Mischung enthaltend zwei oder mehrere Verbindungen ausgewählt aus Isomeren von Benzyltoluol und/oder Dibenzyltoluol, in katalytischen Verfahren zur Bindung bzw. Freisetzung von Wasserstoff an die bzw. von der Mischung.

2. Verwendung nach Anspruch 1, **dadurch gekennzeichnet, dass** die flüssige Mischung zwei oder mehrere Verbindungen ausgewählt aus einem Gemisch aus unterschiedlichen Isomeren von Benzyltoluol und Dibenzyltoluol, enthält.

3. Verwendung nach Anspruch 2, **dadurch gekennzeichnet, dass** ein Massenanteil an zwei oder mehr Verbindungen, ausgewählt aus einem Gemisch aus unterschiedlichen Isomeren von Benzyltoluol und Dibenzyltoluol, bezogen auf die Gesamtmasse der flüssigen Mischung mehr als 50 Massen%, vorzugsweise mehr als 90 Massen% beträgt.

4. Verfahren zur mindestens anteiligen Versorgung eines Verbrauchers mit Wasserstoff, unter Verwendung einer flüssigen Mischung zur Bindung bzw. Freisetzung von Wasserstoff an die bzw. von der Mischung enthaltend zwei oder mehrere Verbindungen ausgewählt aus Isomeren von Benzyltoluol und/oder Dibenzyltoluol und insbesondere ausgewählt aus einem Gemisch aus unterschiedlichen Isomeren von Benzyltoluol und Dibenzyltoluol, **dadurch gekennzeichnet, dass** ein Reaktor aus einem ersten Speichertank für die Wasserstoff tragende Mischung über eine Zulaufleitung mit dieser versorgt wird und die im Reaktor bei hoher Temperatur und niedrigem Druck dehydrierte Mischung über eine Ablaufleitung von dem Reaktor in einen zweiten Speichertank abgeleitet wird, wobei der Reaktor den Verbraucher über eine Verbindungsleitung mit Wasserstoff versorgt.

5. Verfahren nach Anspruch 4, **dadurch gekennzeichnet, dass** ein Massenanteil an zwei oder mehr Verbindungen, ausgewählt aus einem Gemisch aus unterschiedlichen Isomeren von Benzyltoluol und Dibenzyltoluol, bezogen auf die Gesamtmasse der flüssigen Mischung mehr als 50 Massen%, vorzugsweise mehr als 90 Massen% beträgt.

6. Verfahren nach Anspruch 4 oder 5, **dadurch gekennzeichnet, dass** der Verbraucher eine Brennkraftmaschine oder wenigstens eine Brennstoffzelle ist.

7. Verfahren nach einem der Ansprüche 4 bis 6, **dadurch gekennzeichnet, dass** der Verbraucher zur Energieversorgung eines Kraftfahrzeugs beiträgt.

8. Verfahren nach einem der Ansprüche 4 bis 7, **dadurch gekennzeichnet, dass** die Mischung im Reaktor mit einem metallhaltigen Katalysator kontaktiert wird und dabei den Wasserstoff bindet oder freisetzt, wobei die für die Wasserstoffbeladung und Wasserstoffentladung verwendeten metallhaltigen Katalysatoren gleiche oder unterschiedliche feste Kontakte sind, die eines oder mehrere der Metalle Palladium, Nickel, Platin, Iridium, Ruthenium, Cobalt, Rhodium, Kupfer, Gold, Rhenium oder Eisen in feinverteilter Form auf einem porösen, unpolaren Träger enthalten.

9. Verfahren nach einem der Ansprüche 4 bis 8, **dadurch gekennzeichnet, dass** im Reaktor, aus der Wasserstoff beladenen Mischung, mittels katalytischer Dehydrierung bei hoher Temperatur und niedrigem Druck, Wasserstoff freigesetzt wird.

## Claims

1. Use of a mixture which is liquid at room temperature and contains two or more compounds selected from isomers of benzyltoluene and/or dibenzyltoluene in catalytic methods for binding hydrogen to and/or releasing hydrogen from the mixture.

2. Use according to claim 1, **characterised in that** the liquid mixture contains two or more compounds selected from a mixture of different isomers of benzyltoluene and dibenzyltoluene.

3. Use according to claim 2, **characterised in that** a mass fraction of two or more compounds, selected from a mixture of different isomers of benzyltoluene and dibenzyltoluene, in relation to the total mass of the liquid mixture is more than 50 mass %, preferably more than 90 mass %.

4. A method for at least partially supplying a consumer with hydrogen, using a liquid mixture to bind hydrogen to and/or release hydrogen from the mixture, the mixture containing two or more compounds selected from isomers of benzyltoluene and/or dibenzyltoluene and more especially selected from a mixture of different isomers of benzyltoluene and dibenzyltoluene, **characterised in that** a first storage tank for the hydrogen-carrying mixture supplies the mixture to a reactor via a feed line and the mixture dehydrogenated in the reactor at high temperature and low pressure is discharged from the reactor into a second storage tank via a discharge line, wherein the reactor supplies the consumer with hydrogen via a connecting line.

5. A method according to claim 4, **characterised in that** a mass fraction of two or more compounds, selected from a mixture of different isomers of benzyltoluene and dibenzyltoluene, in relation to the total mass of the liquid mixture, is more than 50 mass %, preferably more than 90 mass %.

6. A method according to claim 4 or 5, **characterised in that** the consumer is an internal combustion engine or at least one fuel cell.

7. A method according to any one of claims 4 to 6, **characterised in that** the consumer contributes to the energy supply of a motor vehicle.

8. A method according to any one of claims 4 to 7, **characterised in that** the mixture is contacted in the reactor with a metal-containing catalyst and binds or releases hydrogen in the process, wherein the metal-containing catalysts used for hydrogen loading and hydrogen unloading are identical or different solid contacts containing one or more of the metals palladium, nickel, platinum, iridium, ruthenium, cobalt, rhodium, copper, gold, rhenium or iron in finely dispersed form on a porous apolar carrier.

9. A method according to any one of claims 4 to 8, **characterised in that** hydrogen is released in the reactor from the hydrogen-laden mixture by catalytic dehydrogenation at high temperature and low pressure

## Revendications

1. Utilisation d'un mélange liquide à température ambiante et renfermant au moins deux composés choisis parmi des isomères de benzyl toluène et/ou de dibenzyl toluène dans des procédés catalytiques permettant de lier ou de libérer de l'hydrogène dans le mélange ou à partir du mélange.

2. Utilisation conforme à la revendication 1,
**caractérisée en ce que**
le mélange liquide renferme au moins deux composés choisis parmi un mélange de différents isomères de benzyl toluène et de dibenzyl toluène.

3. Utilisation conforme à la revendication 2,
**caractérisée en ce que**
la proportion massique des composés choisis parmi un mélange de différents isomères de benzyl toluène et de dibenzyl toluène, est supérieure à 50% en masse et de préférence supérieure à 90% en masse par rapport à la masse totale du mélange liquide.

4. Procédé permettant d'alimenter au moins partiellement un consommateur en hydrogène en utilisant un mélange liquide permettant de lier ou de libérer de l'hydrogène dans le mélange ou à partir du mélange renfermant au moins deux composés choisis parmi des isomères de benzyl toluène et/ou de dibenzyl toluène et en particulier choisis parmi un mélange de différents isomères de benzyl toluène et de dibenzyl toluène,
**caractérisé en ce qu'**
un réacteur est alimenté par l'intermédiaire d'une conduite d'entrée, en un mélange porteur d'hydrogène à partir d'un premier réservoir de stockage d'un tel mélange et, le mélange déshydrogéné dans le réacteur à température élevée et basse pression est soutiré de ce réacteur par une conduite de sortie et transféré dans un second réservoir de stockage,
le réacteur alimentant le consommateur en hydrogène par une conduite de liaison.

5. Procédé conforme à la revendication 4,
**caractérisé en ce que**
la proportion massique des composés choisis parmi un mélange de différents isomères de benzyl toluène et de dibenzyl toluène est égale à plus de 50% en masse de préférence à plus de 90% en masse par rapport à la masse totale du mélange liquide.

6. Procédé conforme à la revendication 4 ou 5,
**caractérisé en ce que**
le consommateur est un moteur à combustion interne ou au moins une pile à combustible.

7. Procédé conforme à l'une des revendications 4 à 6,
**caractérisé en ce que**
le consommateur contribue à l'alimentation en énergie d'un véhicule.

8. Procédé conforme à l'une des revendications 4 à 7,
**caractérisé en ce que**
dans le réacteur le mélange est mis en contact avec un catalyseur renfermant un métal, et, l'hydrogène y est lié ou libéré, les catalyseurs renfermant du métal utilisé pour charger ou décharger le mélange en hydrogène étant des contacts fixes similaires ou différents qui renferment au moins l'un des métaux suivants : palladium, nickel, platine, iridium, ruthénium, cobalt, rhodium, cuivre, or, rhénium ou fer sous une forme finement divisée ou sur un support non polaire poreux.

9. Procédé conforme à l'une des revendications 4 à 8,
**caractérisé en ce que**
de l'hydrogène est libéré dans le réacteur à partir du mélange chargé en hydrogène, par déshydrogénisation catalytique, à haute température et sous faible pression.
